# EUROPEAN PATENT APPLICATION

(11) **EP 4 737 465 A1**
(43) Date of publication of application: **06.05.2026**
(21) Application number: 23946292.2
(22) Date of filing: 31.07.2023
(51) Int. Cl.: C07F 9/6574, C08K 5/5313, C08L 63/02, C08L 71/12, C08L 9/00, C08L 79/04, C08L 79/08

(54) **DOPO DERIVATIVE FLAME RETARDANT CONTAINING ALPHA-HYDROXYL AND HAVING CYCLIC STRUCTURE AS BRIDGE CHAIN, PREPARATION METHOD FOR DOPO DERIVATIVE FLAME RETARDANT, AND USE OF DOPO DERIVATIVE FLAME RETARDANT**

(30) Priority: 24.07.2023 CN 202310909659
(71) Applicant: Ningbo Institute Of Material Technology And Engineering Chinese Academy of Sciences, Ningbo, Zhejiang 315201 (CN); Zhejiang Wansheng Co., Ltd, Taizhou, Zhejiang 317000 (CN)
(72) Inventor: YAO, Qiang, Ningbo, Zhejiang 315200 (CN); SUN, Jinhao, Ningbo, Zhejiang 315200 (CN); LI, Xufeng, Ningbo, Zhejiang 315200 (CN); CAO, Weihong, Ningbo, Zhejiang 315200 (CN); CHU, Zhaoning, Ningbo, Zhejiang 315200 (CN)
(74) Representative: Huang, Liwei
(86) International application number: PCT/CN2023/110072
(87) International publication number: WO 2025/020210

(57) **Abstract**

The present invention provides a DOPO derivative flame retardant containing α-hydroxyl and having a cyclic structure as a bridge chain. The DOPO derivative flame retardant has a structure represented by formula (I). 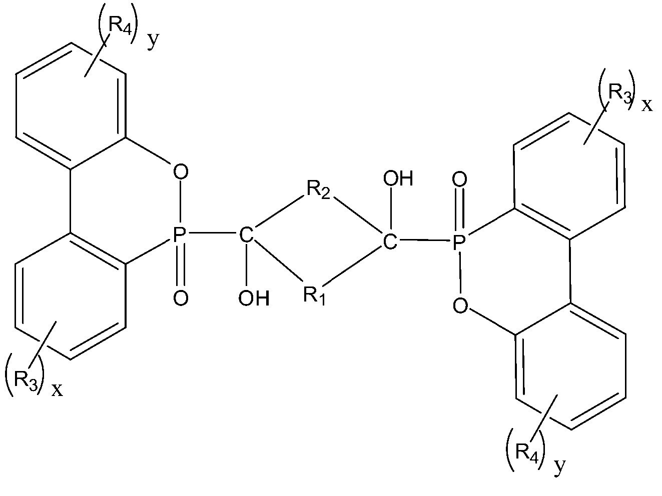 In formula (I), R₁ and R₂ are independently selected from C₁-C₁₈ alkylene; R₃ and R₄ are independently selected from hydrogen, C₁-C₁₈ alkyl, C₃-C₁₈ heteroaryl, and C₆-C₂₄ aryl; and x and y are independently selected from 0, 1, 2, 3, and 4. The DOPO derivative flame retardant has a simple and convenient preparation method, high atom efficiency and good flame retardance, and can retain excellent physical properties of a polymer material.

## Description

### TECHNICAL FIELD

The present invention belongs to the technical field of flame retardant preparation, and relates to a DOPO derivative flame retardant containing α-hydroxyl and having a cyclic structure as a bridge chain, a preparation method for the DOPO derivative flame retardant, and a use of the DOPO derivative flame retardant.

### DESCRIPTION OF RELATED ART

With the rapid rise of polymer material science, polymer materials have been widely used in human production and life. Since most of the polymer materials are flammable, more and more fires are caused by the ignition of polymer materials. Therefore, the flame retardance of polymer materials have been widely concerned. Polymer materials themselves cannot meet the requirements of regulations on flame retardance, and flame retardants often need to be added to achieve the purpose of flame retardance. Recently, halogen-free flame retardants such as phosphorus-based flame retardants have achieved substantial development due to the need of environmental protection. Especially, 9,10-dihydro-9-oxa-10-phosphaphenanthrene-10 -oxide (DOPO) and derivatives thereof have attracted considerable attention owing to their high flame-retardant efficiency, low toxicity, and minimal impact on the properties of polymer materials.

The reported DOPO derivatives can be divided into reactive and additive types: reactive derivatives have reactive groups (such as carboxyl and hydroxyl groups) attached to phosphorus substituents; in contrast, additive derivatives are structurally inert with the absence of reactive functional groups.

Chinese Patent Publication No. CN100366627C reports DiDOPO with a hydroxyalkyl-substituted vinylene bridge chain structure, where the hydroxyl group is distant from the phosphorus atom. The DiDOPO, with high reactivity, is capable of undergoing transesterification with carboxylic acids or esters. Chinese Patent Publication No. CN104086593B reports the preparation of DiDOPO with a phenylene bridge chain structure by addition of a semi-aryl ketone and DOPO. The reaction process proceeds as follows: first, DOPO reacts with ketone group to form an α-hydroxyphosphine compound; subsequently, the hydroxyl group undergoes dehydration with heating to generate a vinyl phosphonate, thereby introducing a second DOPO moiety. Chinese Patent Publication No. CN106366128B introduces allyloxy group by using hydroxyl group of an α-hydroxyphosphine compound, which has high reactivity. Moreover, the patent specifically points out that hydroxyl-containing phosphaphenanthrene compounds are not suitable for low-dielectric systems (with a dielectric loss of less than 0.010). It can be concluded from the patent that the introduction of hydroxyl group is not an option unless it is for the purpose of reaction.

Japanese Patent Publication Nos. JPH11-106619 and JP2001270993 and Chinese Patent Publication No. CN102428091B report DiDOPO having an inert bridge chain structure without reactive functional groups. PCT Patent Application No. WO2013020696A2 and Chinese Patent Publication No. CN109851639B report DOPO derivatives containing P-N bonds. These derivatives can be used as additive flame retardants.

Known reactive DOPO derivatives need to further react with polymers or monomers for use, which is not conducive to flame retardant modification of known polymer materials, and the different reactivity of such derivatives with the polymers or monomers leads to poor performance controllability and high costs. Additive DOPO derivatives have a greater impact on the physical properties of flame-retardant polymer materials. For instance, U.S. Patent No. US8536256B2 discloses that the incorporation of DiDOPO with a vinylene bridge chain structure reduces the glass transition temperature (T_{g}) of epoxy resin from the range of 163°C to 172°C to a range of 126°C to 131°C, which fails to meet the requirements of lead-free soldering and thus limits the scope of application of the epoxy resin. In addition, Chinese Patent Publication No. CN106366128B points out that the presence of hydroxyl group is detrimental to the dielectric loss factor (Df) of flame-retardant polymer materials, making such polymer materials difficult to use in copper-clad laminates with low dielectric loss.

Based on the above analysis, the known reactive and additive DOPO derivatives are still difficult to meet the requirements of thermal and chemical stability and small impact on the physical properties of flame-retardant polymer materials, and the known processes for preparing DOPO derivatives are complex and costly. It is still desired to develop a flame retardant with simple preparation process, high atom efficiency, good flame retardance, little impact on the physical properties of flame-retardant polymer materials and even capable of improving the electrical properties of flame retardant systems.

### BRIEF SUMMARY OF THE INVENTION

An objective of the present invention is to address the defects in the prior art, and to provide a DOPO derivative flame retardant containing α-hydroxyl and having a cyclic structure as a bridge chain, a preparation method for the DOPO derivative flame retardant, and a use of the DOPO derivative flame retardant for the flame retardance of a polymer material. The DOPO derivative flame retardant containing α-hydroxyl and having a cyclic structure as a bridge chain has a simple and convenient preparation method, high atom efficiency and good flame retardance, and can retain excellent physical properties of a polymer material.

A first objective of the present invention is achieved by the following technical solutions:
A DOPO derivative flame retardant containing α-hydroxyl and having a cyclic structure as a bridge chain has a structure represented by formula (I) below: 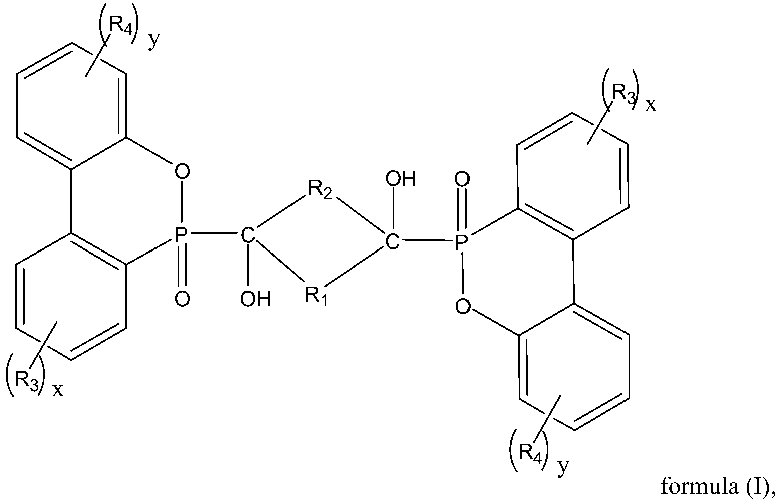
wherein R₁ and R₂ are independently selected from C₁-C₁₈ alkylene, and any hydrogen atom on the alkylene may be independently substituted with C₁-C₈ alkyl or C₆-C₁₈ aryl;
R₃ and R₄ are independently selected from hydrogen, C₁-C₁₈ alkyl, C₃-C₁₈ heteroaryl, and C₆-C₂₄ aryl, and any hydrogen atom on an aromatic ring of the aryl or heteroaryl may be independently substituted with any C₁-C₁₈ alkyl; and
x and y are independently selected from 0, 1, 2, 3, and 4.

Preferably, R₁ and R₂ are independently selected from C₁-C₁₈ alkylene, and any hydrogen atom on the alkylene may be independently substituted with C₁-C₁₈ alkyl. Further preferably, R₁ and R₂ are independently selected from methylene, ethylene, propylene, butylene, methyl-substituted methylene, dimethyl-substituted methylene, ethyl-substituted methylene, methyl-substituted ethylene, dimethyl-substituted ethylene, methyl-substituted propylene, dimethyl-substituted propylene, and propyl-substituted propylene.

Preferably, R₃ and R₄ are independently selected from hydrogen, C₁-C₈ alkyl, C₃-C₁₈ heteroaryl, and C₆-C₁₈ aryl. Further preferably, R₃ and R₄ are independently selected from hydrogen, methyl and ethyl. Optionally, R₃ and R₄ are hydrogen atoms.

Preferably, x=y=0.

A second objective of the present invention is achieved by the following technical solutions:
A preparation method for a DOPO derivative flame retardant containing α-hydroxyl and having a cyclic structure as a bridge chain includes the following steps:
reacting a compound having a structure of formula (II) with an aliphatic cyclic diketone compound having a structure of formula (III), and purifying a reaction product to obtain the DOPO derivative flame retardant containing α-hydroxyl and having a cyclic structure as a bridge chain; 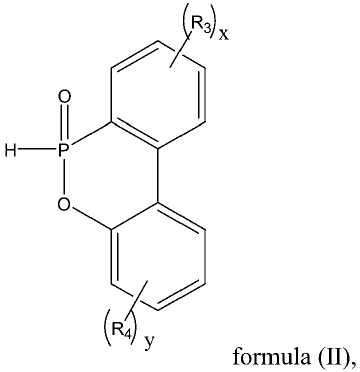
wherein R₃ and R₄, as defined for R₃ and R₄ in formula (I), are independently selected from hydrogen, C₁-C₁₈ alkyl, C₃-C₁₈heteroaryl, C₆-C₂₄ aryl, and any hydrogen atom on an aromatic ring of the aryl or heteroaryl may be independently substituted with any C₁-C₁₈ alkyl;
x and y, as defined for x and y in formula (I), are independently selected from 0, 1, 2, 3, and 4; 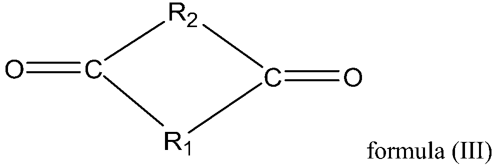
wherein R₁ and R₂, as defined for R₁ and R₂ in formula (I), are independently selected from C₁-C₁₈ alkylene, and any hydrogen atom on the alkylene may be independently substituted with C₁-C₁₈ alkyl or C₆-C₁₈ aryl;

Preferably, the compound having the structure of formula (II) is 9,10-dihydro-9-oxa-10-phosphaphenanthrene-10-oxide. That is, in formula (II), x and y are 0.

Optionally, the aliphatic cyclic diketone compound having the structure of formula (III) includes, but is not limited to, one or more selected from cyclohexanedione, cyclobutanedione, cyclopentanedione, cycloheptanedione, cyclooctanedione, methylcyclohexanedione, dimethylcyclohexanedione, propylcyclohexanedione, tetramethylcyclobutanedione, methylcyclopentanedione, dimethylcyclopentanedione, and ethylcyclopentanedione. Preferably, the aliphatic cyclic diketone compound having the structure of formula (III) is one or more selected from cyclohexanedione, methylcyclohexanedione, dimethylcyclohexanedione, cyclopentanedione, and cycloheptanedione. Further preferably, the aliphatic cyclic diketone compound having the structure of formula (III) is one or more selected from 1,4-cyclohexanedione, 1,3-cyclohexanedione, 5,5-dimethyl-1,3-cyclohexanedione, and cyclopentanedione. Most preferably, the aliphatic cyclic diketone compound is 1,4-cyclohexanedione.

In the present invention, by means of, such as, controlling the molar ratio, reaction time, and purification method of the aliphatic cyclic diketone compound having the structure of formula (III) and the compound having the structure of formula (II), the product obtained is a pure DOPO derivative having the structure represented by formula (I).

Preferably, when the compound having the structure of formula (II) reacts with the aliphatic cyclic diketone compound having the structure of formula (III), a molar ratio of the compound having the structure of formula (II) to the aliphatic cyclic diketone compound having the structure of formula (III) is 2-20:1. Further preferably, the molar ratio is 2-10:1; still further preferably, the ratio is 2.5-7:1. If the molar ratio of the two compounds is too high, the compound having the structure of formula (II) will be in substantial excess, resulting in low utilization rate of raw materials; if the molar ratio is too low, the yield of the product will decrease.

Preferably, when the compound having the structure of formula (II) reacts with the aliphatic cyclic diketone compound having the structure of formula (III), reaction time is between 0.01 h and 25 h. Further preferably, the reaction time is between 0.1 h and 20 h; still further preferably, the reaction time is between 0.5 h and 10 h. If the reaction time is too short, the reaction is insufficient, and the product yield is low; and if the time is too long, the production efficiency is low, and the production cost is increased.

Preferably, when the compound having the structure of formula (II) reacts with the aliphatic cyclic diketone compound having the structure of formula (III), the reaction temperature ranges from room temperature to 250°C. Further preferably, the reaction temperature ranges from 50°C to 220°C; still further preferably, the reaction temperature ranges from 80°C to 200°C. If the reaction temperature is too high, the compound having the structure of formula (II) tends to be thermally degraded; conversely, a too low reaction temperature will result in a sluggish reaction rate and poor economic efficiency.

When the compound having the structure of formula (II) reacts with the aliphatic cyclic diketone compound having the structure of formula (III), the reaction may be performed in the absence of a solvent or in an inert solvent. The absence of a solvent means that no other solvent is added to a reactant, but the excess reactant serves as a solvent. For example, when a large amount of the compound having the structure of formula (II) is added, the portion of the compound having the structure of formula (II), left after the reaction with the aliphatic cyclic diketone compound having the structure of formula (III), can serve as a solvent. The inert solvent may be, for example, one or more selected from conventional solvents including aromatic hydrocarbon, alkane, alcohol, and ester; optionally, the inert solvent is one or more selected from toluene, xylene, and trimethylbenzene.

When the compound having the structure of formula (II) reacts with the aliphatic cyclic diketone compound having the structure of formula (III), the reaction may be performed at normal pressure, positive pressure or negative pressure.

When the compound having the structure of formula (II) reacts with the aliphatic cyclic diketone compound having the structure of formula (III), unexpectedly, the reaction may be performed without the addition of a catalyst. Typically, the phosphination reaction in which a P-H bond is added to a ketone group, namely the Pudovik reaction, requires a basic or acidic catalyst. However, when the aliphatic cyclic diketone compound having the structure of formula (III) reacts with the compound having the structure of formula (II), no catalyst needs to be added, which greatly reduces the cost of catalyst removal and greatly improves the economic efficiency. Of course, the reaction may also be performed in the presence of a catalyst, and the catalyst may be any catalyst used in the Pudovik reaction, such as one or more selected from titanate, organic amine, inorganic base, aliphatic aluminum alcoholate, and the like. Preferably, the reaction is performed without the addition of a catalyst.

After completion of the reaction, purification may be performed by conventional methods such as solvent washing and recrystallization, to remove unreacted materials, intermediates, and impurities to obtain the high-purity DOPO derivative having a structure represented by formula (I). Optionally, after completion of the reaction, the product is washed with a solvent. Optionally, the solvent used in the solvent washing is a good solvent for the compound having the structure of formula (II) and/or the aliphatic cyclic diketone compound having the structure of formula (III). Optionally, the solvent used in the solvent washing is one or more selected from alcohol, ester, ether, alkane and aromatic hydrocarbon. Optionally, the solvent used in the solvent washing is selected from one or more selected from ethanol, isopropanol, toluene and p-xylene.

Specifically, the preparation method for a DOPO derivative flame retardant containing α-hydroxyl and having a cyclic structure as a bridge chain includes the following steps:
dissolving a compound having a structure of formula (II) in an inert solvent, or heating and melting the compound having the structure of formula (II), adding an aliphatic cyclic diketone compound having a structure of formula (III) for reaction, and then performing purification to obtain the DOPO derivative flame retardant containing α-hydroxyl and having a cyclic structure as a bridge chain.

A third objective of the present invention is achieved by the following technical solutions:
A flame-retardant polymer material includes the DOPO derivative flame retardant containing α-hydroxyl and having a cyclic structure as a bridge chain and a polymer material.

Preferably, the flame-retardant polymer material includes 1 wt% to 50 wt% of the DOPO derivative flame retardant containing α-hydroxyl and having a cyclic structure as a bridge chain and 50 wt% to 99 wt% of the polymer material.

Optionally, the mass fraction of the DOPO derivative flame retardant containing α-hydroxyl and having a cyclic structure as a bridge chain in the flame-retardant polymer material ranges from 1 wt% to 50 wt%, further from 1 wt% to 45 wt%, further from 1 wt% to 40 wt%, further from 2 wt% to 50 wt%, further from 2 wt% to 45 wt%, further from 2 wt% to 40 wt%, further from 3 wt% to 50 wt%, further from 3 wt% to 45 wt%, further from 3 wt% to 40 wt%, further from 5 wt% to 35 wt%, further from 3 wt% to 30 wt%, further from 5 wt% to 30 wt%, further from 5 wt% to 25 wt%, further from 8 wt% to 30 wt%, further from 10 wt% to 30 wt%, and further from 12 wt% to 30 wt%. All values not listed in the above ranges apply.

Specifically, the amount of the DOPO derivative flame retardant containing α-hydroxyl and having a cyclic structure as a bridge chain depends on the structure of the polymer material and the flame retardant effect to be achieved.

The polymer material is one or more selected from thermoplastic resin and thermosetting resin.

The thermoplastic resin is one or more selected from polybutadiene, polyamide, polyester, polyphenylene ether, acrylonitrile butadiene styrene copolymer, polyethylene, polypropylene, polyvinyl chloride, polystyrene, polyimide, polyphenylene sulfide, and polyether ether ketone.

The thermosetting resin is one or more selected from vinyl polyphenylene ether resin, epoxy resin, cyanate ester resin, BT resin, bismaleimide resin, phenolic resin, polyurethane resin, thermosetting polyimide, unsaturated polyester resin, vinyl resin, benzoxazine resin, arylacetylene resin, and furan resin. Preferably, the thermosetting resin is one or more selected from vinyl polyphenylene ether resin, epoxy resin, cyanate ester resin, BT resin, bismaleimide resin, and thermosetting polyimide. Further preferably, the thermosetting resin is one or more selected from vinyl polyphenylene ether resin and epoxy resin.

The vinyl polyphenylene ether resin refers to a polyphenylene ether resin with unsaturated double bonds in end-capping groups. Optionally, the vinyl polyphenylene ether resin is one or more selected from OPE-2st (Mitsubishi Gas Chemical) and SA-9000 (SABIC).

Preferably, the epoxy resin is one or more selected from bisphenolA epoxy resin, bisphenol F epoxy resin, dicyclopentadiene epoxy resin, biphenyl epoxy resin or naphthol epoxy resin.

Optionally, the mass fraction of the polymer material in the flame-retardant polymer material ranges from 50 wt% to 99 wt%, further from 50 wt% to 90 wt%, further from 50 wt% to 80 wt%, further from 50 wt% to 70 wt%, further from 50 wt% to 60 wt%, further from 55 wt% to 99 wt%, further from 55 wt% to 90 wt%, further from 55 wt% to 80 wt%, further from 55 wt% to 70 wt%, further from 60 wt% to 90 wt%, and further from 65 wt% to 85 wt%. All values not listed in the above ranges apply.

Optionally, the flame-retardant polymer material further includes a functional additive, and the functional additive is one or more selected from a reinforcing agent, an anti-dripping agent, a stabilizer, a pigment, a dye, a charring catalyst, a dispersant, a nucleating agent, an inorganic filler, an organic filler, and an antioxidant.

The reinforcing agent may be, for example, glass fiber.

The anti-dripping agent may be, for example, a polytetrafluoroethylene-based anti-dripping agent.

Optionally, the inorganic filler is one or more selected from silicon dioxide, mica, calcium carbonate, alumina, aluminum nitride, talc, calcium oxide, calcium silicate, glass fiber powder and silica stone. Preferably, the inorganic filler is silicon dioxide. Further preferably, the median particle size (D₅₀) of silicon dioxide ranges from 1 µm to 15 µm.

Optionally, the organic filler is one or more selected from polytetrafluoroethylene powder, polyphenylene sulfide powder and polyethersulfone powder.

Optionally, the mass fraction of the functional additive in the flame-retardant polymer material ranges from 5 wt% to 40 wt%, further from 5 wt% to 35 wt%, further from 5 wt% to 30 wt%, further from 5 wt% to 25 wt%, further from 5 wt% to 20 wt%, further from 10 wt% to 35 wt%, further from 15 wt% to 35 wt%, and further from 20 wt% to 35 wt%. All values not listed in the above ranges apply.

Optionally, the flame-retardant polymer material further includes a flame retardant Q, and the flame retardant Q is one or more selected from a phosphorus-based flame retardant, a nitrogen-based flame retardant and a boron-based flame retardant.

Preferably, the phosphorus-based flame retardant is one or more selected from a bisphosphate-based flame retardant, a phosphazene-based flame retardant, a dialkylphosphinate, a DOPO derivative, and a phosphine oxide compound.

Further, the bisphosphate-based flame retardant is one or more selected from bisphenol A bisdiphenyl phosphate, resorcinol bisdiphenyl phosphate, and 1,3-phenylene tetrakis(2,6-xylyl) phosphate.

Further, the phosphazene-based flame retardant is one or more selected from hexaphenoxycyclotriphosphazene, cyanophenoxyphosphazene (e.g., FP-300, Fushimi Pharmaceutical), allylcyclophosphazene (e.g., SPV-100, Otsuka, Japan), and cyclic biphenoxyphosphazene (e.g. BP-PZ, Otsuka, Japan).

Further, the dialkylphosphinate is one or more selected from aluminum diethylphosphinate, aluminum diisobutylphosphinate, aluminum dipropylphosphinate and zinc diethylphosphinate.

Further, the DOPO derivative is one or more selected from, for example, 6H-dibenzo[c,e][1,2]oxophosphoglyceride, 6,6'-(1,2-ethanediyl)bis-6,6'-dioxide, 6H-dibenzo[c,e][1,2]oxaphosphorin-6,6'-(1,4-ethanediyl)bis-6,6'-dioxide, and 6H-dibenzo[c, e][1,2]oxaphosphorin-6,6'-(1,4-phenylethanediyl)bis-6,6'-dioxide (e.g., HTP-6123, GuizhouYuanyi Group).

Further, the phosphine oxide compound is a p-xylylenebis(diphenylphosphine oxide) (e.g., PQ-60, Jinyi Chemical).

Preferably, the nitrogen-based flame retardant is one or more selected from melamine cyanurate, melamine polyphosphate and ammonium polyphosphate.

Preferably, the boron-based flame retardant is selected from zinc borate.

Optionally, the mass fraction of the flame retardant Q in the flame-retardant polymer material ranges from 0.5 wt% to 20 wt%, further from 0.5 wt% to 15 wt%, further from 0.5 wt% to 10 wt%, further from 1 wt% to 20 wt%, further from 1 wt% to 18 wt%, further from 1 wt% to 13 wt%, further from 2 wt% to 19 wt%, further from 2 wt% to 14 wt%, further from 3 wt% to 16 wt%, further from 4 wt% to 17 wt%, and further from 5 wt% to 12 wt%. All values not listed in the above ranges apply.

Preferably, the flame-retardant polymer material includes the DOPO derivative flame retardant containing α-hydroxyl and having a cyclic structure as a bridge chain and the phosphorus-based flame retardant, and a mass ratio of the DOPO derivative flame retardant containing α-hydroxyl and having a cyclic structure as a bridge chain to the phosphorus-based flame retardant is 1-20: 1. According to the present invention, the DOPO derivative flame retardant containing α-hydroxyl and having a cyclic structure as a bridge chain and the phosphorus-based flame retardant are used together, which advantageously improves the flame retardance of the polymer material, and also reduces the dielectric loss factor (Df) of the polymer material.

A fourth objective of the present invention is achieved by the following technical solutions:

A low-dielectric flame-retardant resin composition includes 2 to 150 parts by weight of the DOPO derivative flame retardant containing α-hydroxyl and having a cyclic structure as a bridge chain and 100 parts by weight of vinyl polyphenylene ether resin.

The low-dielectric flame-retardant resin composition of the present invention further includes a crosslinking agent and an initiator. Optionally, 1 to 200 parts by weight of the crosslinking agent and 0.1 to 15 parts by weight of the initiator are added per 100 parts by weight of the vinyl polyphenylene ether resin.

Preferably, the low-dielectric flame-retardant resin composition has a dielectric loss factor lower than that of a composition including the vinyl polyphenylene ether resin but not including the DOPO derivative flame retardant containing α-hydroxyl and having a cyclic structure as a bridge chain.

Preferably, the low-dielectric flame-retardant resin composition has a dielectric loss factor lower than that of a composition including the vinyl polyphenylene ether resin, the crosslinking agent and the initiator but not including the DOPO derivative flame retardant containing α-hydroxyl and having a cyclic structure as a bridge chain.

Compounds containing hydroxyl groups are known to be detrimental to the dielectric loss factor. That is, the introduction of hydroxyl groups increases the dielectric loss factor. Surprisingly, however, although the DOPO derivative flame retardants containing α-hydroxyl and having a cyclic structure as a bridge chain also contain hydroxyl groups, the introduction of same can significantly reduce the dielectric loss factor of polymer materials such as vinyl polyphenylene ether resin systems, which is completely contrary to conventional knowledge and is unexpected. This unexpected result may be attributed to the fact that the α-hydroxyl group in the DOPO derivative flame retardant containing α-hydroxyl and having a cyclic structure as a bridge chain can form an intramolecular hydrogen bond with an adjacent P=O. Moreover, since the existence of cyclic bridge chain restricts the conformation of the α-hydroxyl group, the strength of the intramolecular hydrogen bond is stronger than that of the hydrogen bond formed by hydroxyl on a non-cyclic bridge chain and the impact of the hydroxyl group on dielectric loss is significantly reduced. In addition, the intramolecular hydrogen bond also significantly reduces the chemical reactivity of the hydroxyl group. Although the DOPO derivative flame retardant containing α-hydroxyl and having a cyclic structure as a bridge chain contains hydroxyl groups, the DOPO derivative flame retardant exhibits an inert nature, which makes it novel and different from conventional hydroxyl-containing reactive flame retardants. In addition, the presence of hydroxyl also increases the melting point of DOPO derivatives containing α-hydroxyl and having a cyclic structure as a bridge chain. The increase in melting point is conducive to reducing the expansion coefficient of copper-clad laminates. The existence of hydroxyl also increases the bonding strength with metals, making the copper-clad laminates resistant to delamination.

In the low-dielectric flame-retardant resin composition, 2 to 150 parts by weight of the DOPO derivative flame retardant containing α-hydroxyl and having a cyclic structure as a bridge chain are added per 100 parts by weight of the vinyl polyphenylene ether resin. If the DOPO derivative flame retardant containing α-hydroxyl and having a cyclic structure as a bridge chain is used in a too small amount, flame retardance is insufficient; conversely, the use of a too large amount of the DOPO derivative flame retardant has an increased adverse effect on the mechanical properties of the flame-retardant resin composition. Optionally, based on 100 parts by weight of the vinyl polyphenylene ether resin, the amount of the DOPO derivative flame retardant containing α-hydroxyl and having a cyclic structure as a bridge chain is any one of 2, 3, 4, 5, 10, 15, 20, 25, 30, 35, 40, 45, 50, 55, 60, 65, 70, 75, 80, 85, 90, 95, 100, 110, 120, 130, 140 and 150 parts by weight or within a range between any two of the aforementioned values.

Preferably, in the formula (I) of the DOPO derivative flame retardant containing α-hydroxyl and having a cyclic structure as a bridge chain, R₁ and R₂ are ethylene, R₃=R₄=H, and x=y=0.

The vinyl polyphenylene ether resin refers to a polyphenylene ether resin with unsaturated double bonds in end-capping groups. Optionally, the vinyl polyphenylene ether resin is one or more selected from OPE-2st (Mitsubishi Gas Chemical) and SA-9000 (SABIC).

The low-dielectric flame-retardant resin composition includes a crosslinking agent. Optionally, the crosslinking agent is used in an amount of 1 to 200 parts by weight per 100 parts by weight of the vinyl polyphenylene ether resin. Optionally, the crosslinking agent includes, but is not limited to, olefinic compounds; optionally, the crosslinking agent is one or more selected from polybutadiene, polyisoprene, triallylisocyanurate, triallylcyanurate, styrene-butadiene-styrene polymer, styrene-butadiene polymer, and bismaleimide. Preferably, the crosslinking agent is selected from triallylisocyanurate.

The low-dielectric flame-retardant resin composition includes an initiator. Optionally, the initiator is used in an amount of 0.1 to 15 parts by weight per 100 parts by weight of the vinyl polyphenylene ether resin. Optionally, one or more initiators may be optionally added to accelerate the curing rate of the resin. Preferably, the initiator includes a free-radical-generating peroxide, including, but not limited to, dicumyl peroxide, di-tert-butylperoxydiisopropylbenzene, tert-butyl peroxybenzoate, benzoyl peroxide, dibenzoyl peroxide, and tert-butyl peroxyisopropyl carbonate. Most preferably, the initiator is dicumyl peroxide.

Optionally, the low-dielectric flame-retardant resin composition includes a polymer resin and/or a functional additive.

The polymer resin is one or more selected from thermoplastic polymer resin and thermosetting polymer resin.

The thermoplastic polymer resin is one or more selected from polybutadiene, polyamide, polyester, polyphenylene ether, acrylonitrile butadiene styrene copolymer, polyethylene, polypropylene, polyvinyl chloride, polystyrene, polyimide, polyphenylene sulfide, and polyether ether ketone.

The thermosetting polymer resin is one or more selected from epoxy resin, cyanate ester resin, BT resin, bismaleimide resin, phenolic resin, polyurethane resin, thermosetting polyimide, unsaturated polyester resin, vinyl resin, benzoxazine resin, arylacetylene resin, and furan resin. Preferably, the polymer resin is one or more selected from epoxy resin, cyanate ester resin, BT resin, bismaleimide resin, and thermosetting polyimide.

Optionally, in the low-dielectric flame-retardant resin composition, 1 to 300 parts by weight of the polymer resin are added per 100 parts by weight of the vinyl polyphenylene ether resin. The amount of the polymer resin may be any one of 1, 2, 3, 4, 5, 10, 15, 20, 25, 30, 35, 40, 45, 50, 60, 70, 80, 90, 100, 120, 150, 180, 200, 230, 260 and 300 parts by weight, or within a range between any two of the aforementioned values.

The functional additive is at least of a reinforcing agent, an anti-dripping agent, a stabilizer, a pigment, a dye, a charring catalyst, a dispersant, a nucleating agent, an inorganic filler, an organic filler, and an antioxidant.

The reinforcing agent may be, for example, glass fiber.

The anti-dripping agent may, for example, a polytetrafluoroethylene-based anti-dripping agent.

Preferably, the inorganic filler is one or more selected from silicon dioxide, mica, calcium carbonate, alumina, aluminum nitride, talc, calcium oxide, calcium silicate, glass fiber powder and silica stone. Preferably, the inorganic filler is silicon dioxide. Further preferably, the median particle size (D₅₀) of silicon dioxide ranges from 1 µm to 15 µm.

Preferably, the organic filler is one or more selected from polytetrafluoroethylene powder, polyphenylene sulfide powder and polyethersulfone powder.

Optionally, in the low-dielectric flame-retardant resin composition, 1 to 500 parts by weight of the functional additive are added per 100 parts by weight of the vinyl polyphenylene ether resin. The amount of the functional additive may be any one of 1, 2, 3, 4, 5, 10, 15, 20, 25, 30, 35, 40, 45, 50, 60, 70, 80, 90, 100, 120, 150, 180, 200, 230, 260, 300, 350, 400, 450 and 500 parts by weight, or within a range between any two of the aforementioned values.

Optionally, the low-dielectric flame-retardant resin composition further includes a flame retardant Q, and the flame retardant Q is one or more selected from a phosphorus-based flame retardant, a nitrogen-based flame retardant and a boron-based flame retardant.

Preferably, the phosphorus-based flame retardant is one or more selected from a bisphosphate-based flame retardant, a phosphazene-based flame retardant, a dialkylphosphinate, a DOPO derivative, and a phosphine oxide compound.

Further, the bisphosphate-based flame retardant isone or more selected from bisphenol A bisdiphenyl phosphate, resorcinol bisdiphenyl phosphate, and 1,3-phenylene tetrakis(2,6-xylyl) phosphate.

Further, the phosphazene-based flame retardant is one or more selected from hexaphenoxycyclotriphosphazene, cyanophenoxyphosphazene (e.g., FP-300, Fushimi Pharmaceutical), allylcyclophosphazene (e.g., SPV-100, Otsuka, Japan), and cyclic biphenoxyphosphazene (e.g. BP-PZ, Otsuka, Japan).

Further, the dialkylphosphinate is one or more selected from aluminum diethylphosphinate, aluminum diisobutylphosphinate, aluminum dipropylphosphinate and zinc diethylphosphinate.

Further, the DOPO derivative is one or more selected from, for example, 6H-dibenzo[c,e][1,2]oxophosphoglyceride, 6,6'-(1,2-ethanediyl)bis-6,6'-dioxide, 6H-dibenzo[c,e][1,2]oxaphosphorin-6,6'-(1,4-ethanediyl)bis-6,6'-dioxide, and 6H-dibenzo[c, e][1,2]oxaphosphorin-6,6'-(1,4-phenylethanediyl)bis-6,6'-dioxide.

Further, the phosphine oxide compound is a p-xylylenebis(diphenylphosphine oxide) (e.g., PQ-60, Jinyi Chemical).

Preferably, the nitrogen-based flame retardant is one or more selected from melamine cyanurate, melamine polyphosphate and ammonium polyphosphate.

Preferably, the boron-based flame retardant is selected from zinc borate.

Optionally, in the low-dielectric flame-retardant resin composition, 1 to 30 parts by weight of the flame retardant Q are added per 100 parts by weight of the vinyl polyphenylene ether resin. The amount of the flame retardant Q may be any one of 1, 2, 3, 4, 5, 8, 10, 12, 15, 18, 20, 25 and 30 parts by weight, or within a range between any two of the aforementioned values.

Preferably, the low-dielectric flame-retardant resin composition includes the DOPO derivative flame retardant containing α-hydroxyl and having a cyclic structure as a bridge chain and the phosphorus-based flame retardant, and a mass ratio of the DOPO derivative flame retardant containing α-hydroxyl and having a cyclic structure as a bridge chain to the phosphorus-based flame retardant is 1-20: 1. According to the present invention, the DOPO derivative flame retardant containing α-hydroxyl and having a cyclic structure as a bridge chain and the phosphorus-based flame retardant are used together, which advantageously improves the flame retardance of the polymer material, and also reduces the dielectric loss factor (Df) of the low-dielectric flame-retardant resin composition.

A fifth objective of the present invention is achieved by the following technical solutions:
A flame-retardant epoxy resin includes the DOPO derivative flame retardant containing α-hydroxyl and having a cyclic structure as a bridge chain, an epoxy compound and a curing agent.

Preferably, in the flame-retardant epoxy resin, the mass percent of the DOPO derivative flame retardant containing α-hydroxyl and having a cyclic structure as a bridge chain ranges from 1 wt% to 30 wt%, and the mass percent of the epoxy compound and the curing agent ranges from 70 wt% to 99 wt%.

The mass percent of the DOPO derivative flame retardant containing α-hydroxyl and having a cyclic structure as a bridge chain is any one of 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt% and 30 wt% or within a range between any two of the aforementioned values. When the mass percent is less than 1 wt%, the flame retardance decreases; if the mass percent is higher than 30 wt%, it will cause a reduction in the physical properties of the flame-retardant epoxy resin.

The epoxy compound in the flame-retardant epoxy resin contains at least two epoxy groups and is one or more selected from bisphenol or polyphenol glycidyl ether (e.g., bisphenol A epoxy resins E44 and E51), aliphatic chain glycidyl ether (e.g., polyethylene glycol diglycidyl ether), alicyclic glycidyl ether (1,3- or 1,4-cyclohexane dimethanoldiglycidyl ether), glycidyl ester (e.g., tetrahydrophthalic acid diglycidyl ester, and phthalic acid diglycidyl ester), and a heterocyclic epoxy compound (e.g., triglycidylisocyanurate). Preferably, the epoxy compound is selected from commercially available bisphenol-based glycidyl ethers (e.g., E44 and E51, Baling Petrochemical).

Preferably, the curing agent is an amine-based curing agent which is one or more selected from trimethylenediamine, tetramethylenediamine, hexamethylenediamine, p-phenylenediamine, m-phenylenediamine, p-xylenediamine, m-xylenediamine, 4,4-diaminodiphenylmethane, 4,4-diaminodiphenylsulfone, 4,4-diaminodiphenyl ether, dicyandiamide, and 1,4-cyclohexanediamine. Preferably, the curing agent is one or more selected from trimethylenediamine, tetramethylenediamine, hexamethylenediamine, 4,4-diaminodiphenylmethane and 4,4-diaminodiphenylsulfone.

A preparation method for the flame-retardant epoxy resin specifically includes the following steps:
melting and stirring an epoxy compound, a curing agent and a DOPO derivative flame retardant containing α-hydroxyl and having a cyclic structure as a bridge chain for 0.1 h to 4 h at a temperature between room temperature and 120°C, and then curing for 0.5 h to 8 h at a temperature between 70°C and 90°C, a temperature between 110°C and 130°C and a temperature between 160°C and 180°C respectively, and cooling naturally to obtain the flame-retardant epoxy resin. Preferably, the melting and stirring time ranges from 0.5 h to 2 h, and the time of curing at different temperatures ranges from 0.5 h to 4 h.

The DOPO derivative flame retardant having the structure of formula (I) and containing α-hydroxyl and having a cyclic structure as a bridge chain (hereinafter referred to as "the flame retardant having the structure of formula (I)"), the flame retardant having the structure of formula (I) can better improve the compatibility of the flame retardant with epoxy resin by means of hydroxyl groups than hydroxyl-free DOPO derivatives, such as 6H-dibenzo[c,e][1,2]oxophosphoglyceride or 6,6'-(1,2-ethanediyl) bis-6,6'-dioxide, which is prepared from DOPO and ethylene glycol; and unexpectedly, the flame retardant having the structure of formula (I) well maintains the glass transition temperature of the flame-retardant epoxy resin, reducing the loss of physical properties of the epoxy resin caused by the introduction of the hydroxyl-free DOPO derivatives. It is also unexpected that compared with DOPO derivatives containing α-hydroxy but without a cyclic bridge chain structure (e.g., the reaction products of DOPO with formaldehyde or acetone), the flame retardant having the structure of formula (I) exhibits significantly improved thermal and chemical stability, and can withstand the high-temperature curing process of epoxy resins. In contrast, the former decomposes to produce DOPO, formaldehyde or acetone when heated. Compared with DOPO derivatives with hydroxyl not at α positions, such as DiDOPO with hydroxyalkyl-substituted vinylene bridge chain structure, the flame retardant having the structure of formula (I) has intramolecular hydrogen bonds, are highly inert, have better electrical properties, and the cyclic aliphatic bridge chain structure imparts molecular rigidity, and the flame-retardant epoxy resins have better the physical properties.

Compared with the prior art, the present invention has the following beneficial effects:
1. The preparation method for the DOPO derivative flame retardant containing α-hydroxy and having a cyclic structure as a bridge chain, which has a structure of formula (I), is simple, with no need of a catalyst, the reactants are essentially completely converted into products. The method features high atom efficiency and good economic benefits.
2. By controlling the process conditions such as reaction time, reaction molar ratio and reaction temperature, and through the subsequent purification step, the DOPO derivative flame retardant containing α-hydroxy and having a cyclic structure as a bridge chain, which has a structure of formula (I), can be effectively obtained.
3. Although the DOPO derivative flame retardant containing α-hydroxy and having a cyclic structure as a bridge chain, which has a structure of formula (I), contains hydroxyl groups, the DOPO derivative flame retardant exhibits chemical inertness as well as high thermal and chemical stability, which is completely different from conventional additive and reactive DOPO derivatives. This characteristic makes the DOPO derivative flame retardant possible to maintain or even improve the physical properties of polymer materials while providing effective flame retardance.
4. In particular, although the DOPO derivative flame retardant containing α-hydroxy and having a cyclic structure as a bridge chain, which has a structure of formula (I), contains hydroxyl groups, the DOPO derivative flame retardant can significantly reduce the dielectric loss factor of polymer materials, which is completely unexpected.
5. The DOPO derivative flame retardant containing α-hydroxyl and having a cyclic structure as a bridge chain, which has a structure of formula (I), and the phosphorus-based flame retardant are used in combination, which advantageously improves the flame retardance of the materials, and also reduces the dielectric loss factor (Df) of the materials.
6. Although the DOPO derivative flame retardant containing α-hydroxy and having a cyclic structure as a bridge chain, which has a structure of formula (I), has lower phosphorus content, the DOPO derivative flame retardant has higher flame retardant efficiency for polymers and is used in less amount as compared with hydroxyl-free flame retardants with a corresponding structure.

### BRIEF DESCRIPTION OF THE SEVERAL VIEWS OF THE DRAWINGS

FIG. 1 shows a ³¹P nuclear magnetic resonance (NMR) spectrum of the product of Example 1 of the present invention.
FIG. 2 shows a ¹H nuclear magnetic resonance (NMR) spectrum of the product of Example 1 of the present invention.
FIG. 3 shows an infrared (IR) spectrum of the product of Example 1 of the present invention.

### DETAILED DESCRIPTION OF THE INVENTION

The technical solutions of the present invention are further described and illustrated below by way of specific examples and accompanying drawings. It should be understood that the specific examples described herein are only intended to facilitate the understanding of the present invention and are not intended to impose any specific limitations on the present invention. Moreover, the accompanying drawings used herein are merely for better illustrating the content disclosed by the present invention and shall not impose any limitations on the scope of protection. Unless otherwise specified, the raw materials used in the examples of the present invention are all commonly used raw materials in the art, and the methods adopted in the examples are all conventional methods in the art.

Chemical reagents used in the following Examples and Comparative Examples were as follows:
(A) E44 bisphenol A epoxy resin, purchased from Baling Petrochemical, with an epoxy value of 0.44.
(B) 4,4-diaminodiphenylmethane (DDM), a curing agent, purchased from Aladdin Reagent.
(C) Vinyl polyphenylene ether resin, manufactured by Sabic under the trade name SA9000.
(D) Triallylisocyanurate (TAIC), a crosslinking agent, purchased from Aladdin Reagent.
(E1) Flame retardant prepared in Example 1 or 2 or 3 or 4.
(E2) Vinylidene-bridged DiDOPO-A was prepared according to Chinese Patent Publication No. CN110885344A. The specific preparation method is as follows: 32.4 g of DOPO (0.15 mol), 25 g of diphenylmethane and 20 g of xylene were placed into a four-necked flask equipped with a thermometer, a water separator, a mechanical stirrer and a constant pressure funnel. Under nitrogen protection, the mixture was heated to 195°C, and then a mixed solution of ethylene carbonate (6.6 g, 0.075 mol) and sodium iodide (0.34 g, 0.0023 mol) was added dropwise at a constant rate within 2.5 h, and the temperature of the reaction system was held at 195°C for 2 h till the end of the reaction. After the reaction system was cooled down, 38 g of isopropanol was added, with stirring under reflux for 20 min. After standing and cooling, suction filtration was performed. The solid product was first washed with isopropanol and then with an appropriate amount of deionized water for three times, and then dried in vacuum at 180°C to obtain a white solid powder, i.e., the vinylidene-bridged DiDOPO-A.
(E3) Aluminum diethylphosphinate, purchased from Clariant Corporation under the trade name OP935.
(E4) DOPO-formaldehyde adduct: The specific preparation method is as follows: 43.20 g of DOPO (0.20 mol) and 60 g of xylene were placed into a four-necked flask equipped with a thermometer, a magnetic stirrer and a reflux condenser. Under nitrogen protection, the mixture was heated to 95°C, and then 6.01 g of paraformaldehyde (0.20 mol) was added in several times, followed by reaction at 95°C for 4 h. After standing and cooling, suction filtration was performed. The solid product was washed with toluene, and then dried in vacuum at 100°C to obtain a white solid powder product, i.e., the DOPO-formaldehyde adduct.
(E5) DOPO-acetone adduct: The specific preparation method is as follows: 21.60 g of DOPO (0.10 mol) and 46.4 gof acetone (0.40 mol) were placed into a four-necked flask equipped with a thermometer, a magnetic stirrer and a reflux condenser. Under nitrogen protection, the mixture was heated to reflux temperature, followed by reflux reaction for 4 h. After standing and cooling, suction filtration was performed. The solid product was first washed with acetone and then with an appropriate amount of deionized water for three times, and then dried in vacuum at 80°C to obtain a white solid powder product, i.e., the DOPO-acetone adduct.
(F1) Polybutadiene (PB), purchased from Macklin Reagent.
(F2) BT resin, obtained by curing reaction of N, N'-4,4'-diphenylmethane bismaleimide (BMI) and cyanate ester resin (CE), both purchased from Aladdin Reagent.
(G) Dicumyl peroxide (DCP), an initiator, purchased from Aladdin Reagent.
(H) Spherical silicon dioxide, an inorganic filler, purchased from Qinghe County Andi Metal Materials Co., Ltd., with a particle size of 2 µm.
(I) 1,4-cyclohexanedione, 1,3-cyclopentanedione, and 5,5-dimethyl-1,3-cyclohexanedione, all purchased from Aladdin Reagent.
(J) 9,10-dihydro-9-oxa-10-phosphaphenanthrene-10-oxide (DOPO), purchased from Macklin Reagent.

The methods of characterization in the Examples and Comparative Examples are as follows:
(1) Nuclear magnetic resonance (NMR) spectroscopy: performed on a Bruker AVANCE III 400M NMR spectrometer (Bruker, USA) using deuterated dimethyl sulfoxide as a solvent.
(2) Fourier transform infrared (FTIR) spectroscopy: performed on a Nicolet 6700 infrared spectrometer (Thermo-Fisher, USA), using the KBr pellet method

The flame-retardant resin materials prepared in Examples and Comparative Examples were tested by the following methods:
(1) Flame retardance test: UL-94 vertical burning test was performed on a Model 5400 horizontal/vertical burning tester in accordance with the ASTM D3801 standard.
(2) Mechanical property test: Tensile and flexural tests were performed on Model 5567 universal tensile testing machine (Instron, USA) in accordance with GB/T 1040.1-2006 standard and GB/T 9341-2000 standard respectively; notched impact test was performed on a GT-7045-HML impact tester (GOTECH, Taiwan, China) in accordance with ISO179-1:98 standard.
(3) Glass transition temperature (T_{g}): The T_{g} of the polyphenylene ether resin composition was obtained using a TMA 402 F3 thermomechanical analyzer (NETZSCH, Germany); the T_{g} of the epoxy resin material was measured using a DSC (METTLER, Sweden).
(4) Dielectric constant (Dk) and dielectric loss factor (Df): The dielectric constant (Dk) and dielectric loss factor (Df) of the flame-retardant resin materials were measured by the stripline method on a ZNA Vector Network Analyzer (ROHDE & Schwarz GmbH, Germany), and the value of Df was taken as the average within the frequency range of 9 GHz to 12 GHz.
(5) Coefficient of thermal expansion (CTE): The CTE was tested via thermal mechanical analysis (TMA) on a TMA 402 F3 thermal mechanical analyzer (NETZSCH, Germany).

### Example 1

In this example, the DOPO derivative flame retardant containing α-hydroxyl group and having a cyclic structure as a bridge chain has a structure as shown below: 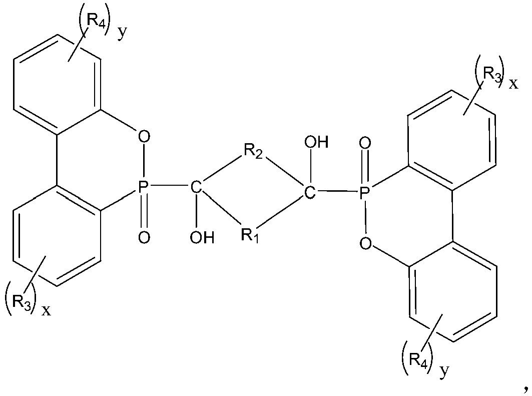 wherein R₁ and R₂ are ethylene (-CH₂CH₂-), R₃ and R₄ are hydrogen atoms, and x=y=0.

The DOPO derivative flame retardant containing α-hydroxyl and having a cyclic structure as a bridge chain was prepared by the following steps:

Under nitrogen protection, 0.15 mol of DOPO was placed in a 250 mL four-necked round-bottom flask equipped with a thermometer, a reflux condenser and a magnetic stirrer; 120 mL of p-xylene was added and the mixture was heated to 120°C until DOPO was completely dissolved; 0.05 mol of 1,4-cyclohexanedione was then added in two batches and the reaction was continued at 120°C for 5 h. After completion of the reaction, suction filtration was performed while the reaction solution was hot; the product was then washed five times with hot isopropanol, and the washed solid product was dried in vacuum at 100°C to obtain a white product, with a yield of 99.0% based on 1,4-cyclohexanedione.

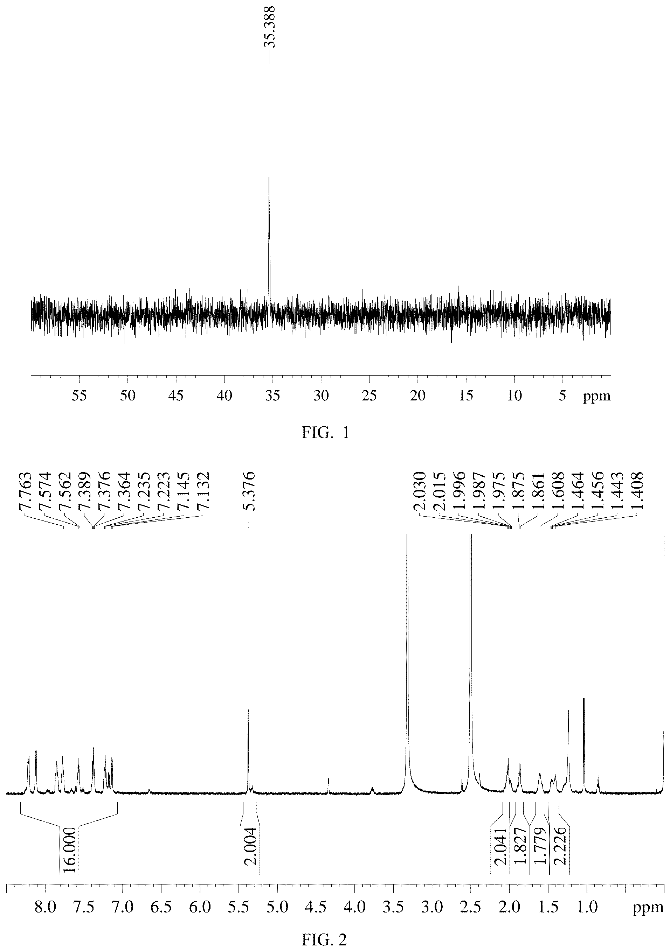

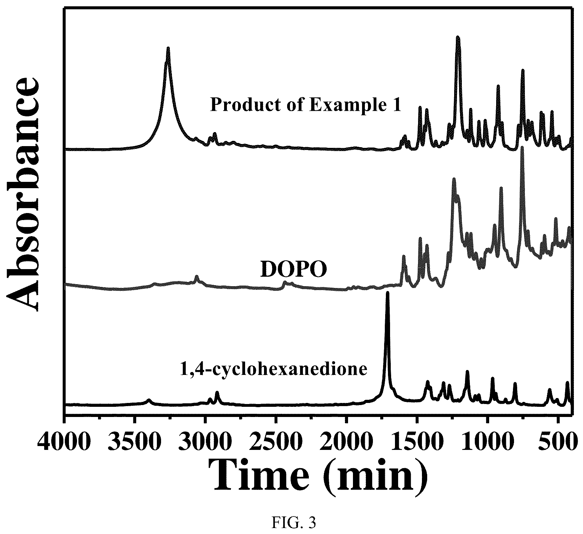

The ³¹P nuclear magnetic resonance (NMR) spectrum and ¹H NMR spectrum of the DOPO derivative flame retardant prepared in Example 1 are shown in FIG. 1 and FIG. 2, respectively. NMR data: ³¹P NMR: 35 ppm; ¹H NMR: 7-8.5 ppm (assigned to the hydrogen atoms of the benzene ring), 5.37 ppm (assigned to the hydrogen atoms of hydroxyl), 1.0-2.5 ppm (assigned to the hydrogen atoms of the alicyclic ring). The infrared (IR) spectrum of the DOPO derivative flame retardant is shown in FIG. 3, with a strong absorption peak of hydroxyl observed at 3263 cm⁻¹. Melting point: greater than 300°C.

### Example 2

In this example, the DOPO derivative flame retardant containing α-hydroxyl group and having a cyclic structure as a bridge chain has a structure as shown below: 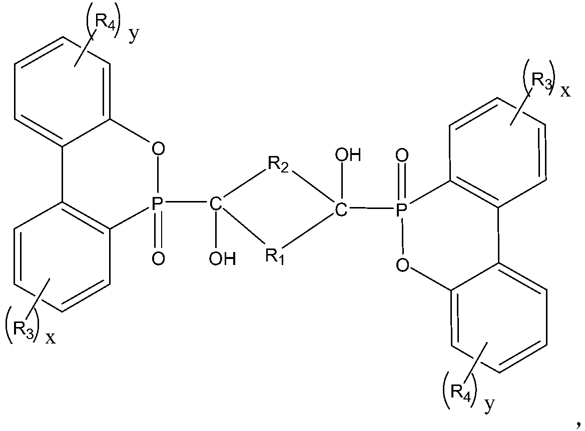 wherein R₁ and R₂ are ethylene (-CH₂CH₂-), R₃ and R₄ are hydrogen atoms, and x=y=0.

The DOPO derivative flame retardant containing α-hydroxyl and having a cyclic structure as a bridge chain was prepared by the following steps:

Under nitrogen protection, 0.25 mol of DOPO was placed in a 250 mL four-necked round-bottom flask equipped with a thermometer, a reflux condenser and a magnetic stirrer and then heated to 180°C and completely melted; and 0.05 mol of 1,4-cyclohexanedione was then added in two batches, and the reaction was continued at 180°C for 2 h before termination. The reaction product was hot washed with a large amount of isopropanol at 60°C, and suction filtration was performed while the mixture was hot. The above operation was repeated three times, followed by drying in an 80°C vacuum oven to obtain a white powder, with a yield of 93.7% based on 1,4-cyclohexanedione. The structure of the white powder was confirmed to be consistent with the aforementioned structure by NMR spectroscopy.

### Example 3

In this example, the DOPO derivative flame retardant containing α-hydroxyl group and having a cyclic structure as a bridge chain has a structure as shown below: 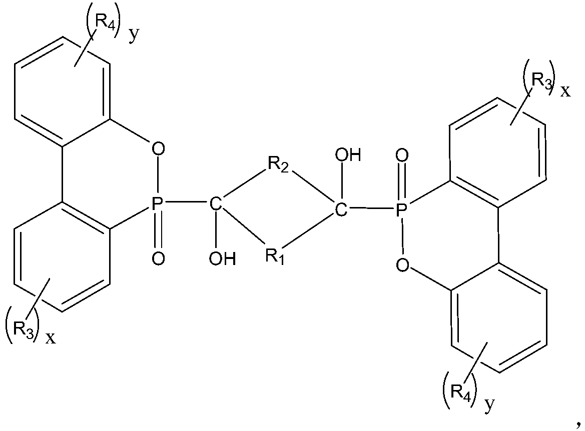 wherein R₁ is methylene (-CH₂-), R₂ is dimethyl-substituted propylidene (-CH₂-C(CH₃)₂-CH₂-), R₃ and R₄ are hydrogen atoms, and x=y =0.

The DOPO derivative flame retardant containing α-hydroxyl and having a cyclic structure as a bridge chain was prepared by the following steps:
Under nitrogen protection, 0.20 mol of DOPO was placed in a 250 mL four-necked round-bottom flask equipped with a thermometer, a reflux condenser and a magnetic stirrer; 150 mL of toluene was added and the mixture was heated to 100°C until DOPO was completely dissolved; 0.1 mol of 5,5-dimethyl-1,3-cyclohexanedione was then added in two batches and the reaction was continued at 100 °C for 6 h. After completion of the reaction, suction filtration was performed while the reaction solution was hot; the product was then washed six times with hot isopropanol, and the washed solid product was dried in vacuum at 90°C to obtain a pale yellow product, with a yield of 92.0% based on 5,5-dimethyl-1,3-cyclohexanedione.

### Example 4

In this example, the DOPO derivative flame retardant containing α-hydroxyl group and having a cyclic structure as a bridge chain has a structure as shown below: 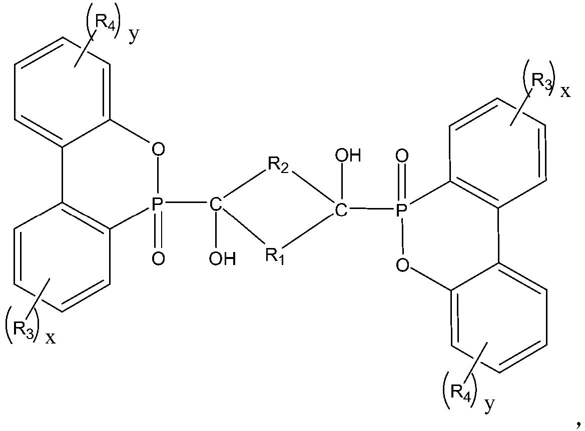 wherein R₁ is methylene (-CH₂-), R₂ is ethylene (-CH₂CH₂-), R₃ and R₄ are hydrogen atoms, and x=y=0.

The DOPO derivative flame retardant containing α-hydroxyl and having a cyclic structure as a bridge chain was prepared by the following steps:
Under nitrogen protection, 0.2 mol of DOPO was placed in a 250 mL four-necked round-bottom flask equipped with a thermometer, a reflux condenser and a magnetic stirrer and then heated to 160°C and completely melted; and 0.1 mol of 1,3-cyclopentanedione was then added in two batches, and the reaction was continued at 160°C for 2 h. After completion of the reaction, the product was washed three times with hot isopropanol, and the washed solid product was dried in vacuum at 100°C to obtain a brown product, with a yield of 95.3% based on 1,3-cyclopentanedione.

### Example 5

77 parts of bisphenol A epoxy resin E44 and 6 parts of the flame retardant obtained in Example 1 were weighed and well mixed with a magnetic stirrer at 90°C; 17 parts of DDM were then added and melted completely at 90°C; the mixture was degassed in a 80°C vacuum oven for 3 min, then poured into a preheated mold quickly, left to stand still for 5 min, and heated to 120°C for curing for 2 h, then heated to 170°C for curing for 4 h, and finally cooled naturally to room temperature to obtain specimens for tests including UL-94 vertical burning, tensile, flexural and notched impact tests, with the results shown in Table 1.

### Example 6

66 parts of bisphenol A epoxy resin E44 and 20 parts of the flame retardant obtained in Example 1 were weighed and well mixed with a magnetic stirrer at 90°C; 14 parts of DDM were then added and melted completely at 90°C; the mixture was degassed in a 80°C vacuum oven for 3 min, then poured into a preheated mold quickly, left to stand still for 5 min, and heated to 120°C for curing for 2 h, then heated to 170°C for curing for 4 h, and finally cooled naturally to room temperature to obtain specimens for tests including UL-94 vertical burning, tensile, flexural and notched impact tests, with the results shown in Table 1.

### Example 7

75.5 parts of bisphenol A epoxy resin E44 and 8 parts of the flame retardant obtained in Example 3 were weighed and well mixed with a magnetic stirrer at 95°C; 16.5 parts of DDM were then added and melted completely at 95°C; the mixture was degassed in a 85°C vacuum oven for 3 min, then poured into a preheated mold quickly, left to stand still for 5 min, and heated to 120°C for curing for 2 h, then heated to 180°C for curing for 4 h, and finally cooled naturally to room temperature to obtain specimens for tests including UL-94 vertical burning, tensile, flexural and notched impact tests, with the results shown in Table 1.

### Example 8

77 parts of bisphenol A epoxy resin E44 and 6 parts of the flame retardant obtained in Example 4 were weighed and well mixed with a magnetic stirrer at 90°C; 17 parts of DDM were then added and melted completely at 90°C; the mixture was degassed in a 85°C vacuum oven for 3 min, then poured into a preheated mold quickly, left to stand still for 5 min, and heated to 120°C for curing for 2 h, then heated to 180°C for curing for 4 h, and finally cooled naturally to room temperature to obtain specimens for tests including UL-94 vertical burning, tensile, flexural and notched impact tests, with the results shown in Table 1.

### Example 9

100 parts of SA9000, 50 parts of TAIC and 200 parts of toluene were weighed and dissolved completely with a magnetic stirrer at room temperature, and 50 parts of the flame retardant prepared in Example 1 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 10

100 parts of SA9000, 50 parts of TAIC and 200 parts of toluene were weighed and dissolved completely with a magnetic stirrer at room temperature, and 70 parts of the flame retardant prepared in Example 2 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 11

100 parts of SA9000, 50 parts of TAIC and 200 parts of toluene were weighed and dissolved completely with a magnetic stirrer at room temperature, and 45 parts of the flame retardant prepared in Example 1 and 5 parts of OP935 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 12

100 parts of SA9000, 50 parts of TAIC, 72 parts of polybutadiene (PB) and 200 parts of toluene were weighed and dissolved completely with a magnetic stirrer at room temperature, and 80 parts of silicon dioxide and 112 parts of the flame retardant prepared in Example 2 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 13

100 parts of SA9000, 50 parts of TAIC, 57.6 parts of CE, 14.4 parts of BMI and 200 parts of toluene were weighed and well mixed with a magnetic stirrer at room temperature, and 80 parts of silicon dioxide and 112 parts of the flame retardant prepared in Example 2 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 14

100 parts of SA9000, 50 parts of TAIC and 200 parts of toluene were weighed and dissolved completely with a magnetic stirrer at room temperature, and 70 parts of the flame retardant prepared in Example 3 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 15

100 parts of SA9000, 50 parts of TAIC and 200 parts of toluene were weighed and dissolved completely with a magnetic stirrer at room temperature, and 50 parts of the flame retardant prepared in Example 4 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Example 16

Under nitrogen protection, 5.44 g of the flame retardant (0.01 mol)prepared in Example 1 and 10.20 g of acetic anhydride (0.10 mol) were placed in a 100 mL four-necked round-bottom flask equipped with a thermometer, a reflux condenser and a magnetic stirrer. The mixture was heated to 140°C for refluxing for 6 h. After the white turbid liquid was cooled naturally, suction filtration was performed. The precipitate was washed with anhydrous ethanol three times and dried in an 80°C vacuum oven, followed by the characterization of FTIR spectroscopy. The FTIR results were completely consistent with those of the product obtained in Example 1, indicating that the hydroxyl groups of the flame retardant with the structure of formula (I) have excellent chemical stability and neither degrade nor react with acetic anhydride at high temperatures.

### Example 17

Under nitrogen protection, 5.44 g of the flame retardant (0.01 mol)prepared in Example 1, 15.01 g of isopropenyl acetate (0.15 mol) and 5% p-toluenesulfonic acid were placed in a 100 mL four-necked round-bottom flask equipped with a thermometer, a reflux condenser and a magnetic stirrer. The mixture was heated to 95°C for refluxing for 4 h. After the white turbid liquid was cooled naturally, suction filtration was performed. The precipitate was washed with anhydrous ethanol three times and dried in an 80°C vacuum oven, followed by the characterization of FTIR spectroscopy. The FTIR results were completely consistent with those of the product obtained in Example 1, indicating that the hydroxyl groups of the flame retardant with the structure of formula (I) have excellent chemical stability and neither degrade nor react withisopropenyl acetate.

### Comparative Example 1

Under nitrogen protection, 2.74 g of the DOPO-acetone adduct (0.01 mol) and 10.20 g of acetic anhydride (0.10 mol) were placed in a 100 mL four-necked round-bottom flask equipped with a thermometer, a reflux condenser and a magnetic stirrer. The mixture was heated to 140°C for refluxing for 1 h to obtain a clear and transparent liquid. After natural cooling, excess acetic anhydride was removed by reduced-pressure distillation, yielding a yellow viscous liquid. In FTIR spectroscopy, distinct carbonyl peaks were observed at 1771 cm⁻¹ and 1747 cm⁻¹, indicating that the hydroxyl groups in the DOPO-acetone adduct have high reactivity and thus react with acetic anhydride. ³¹P NMR spectrum demonstrates that the DOPO-acetone adduct undergoes esterification, dehydration, and the reverse reaction of deacetonation to regenerate DOPO, with the proportions of the three reactions accounting for 18%, 37% and 45%, respectively.

### Comparative Example 2

Under nitrogen protection, 2.46 g of the DOPO-formaldehyde adduct (0.01 mol) and 10.20 g of acetic anhydride (0.10 mol) were placed in a 100 mL four-necked round-bottom flask equipped with a thermometer, a reflux condenser and a magnetic stirrer. The mixture was heated to 140°C for refluxing for 3 h to obtain a clear and transparent liquid. After natural cooling, excess acetic anhydride was removed by reduced-pressure distillation, yielding a yellow viscous liquid. In FTIR spectroscopy, a distinct carbonyl peak was observed at 1753 cm⁻¹, indicating that the hydroxyl groups in the DOPO-formaldehyde adduct have high reactivity and thus react with acetic anhydride. The NMR spectrum demonstrates that the ³¹P NMR chemical shift of the acetylated DOPO-formaldehyde adduct is 28 ppm.

It can be concluded from Examples 16, 17 and Comparative Examples 1 and 2 that the hydroxyl groups in the flame retardant prepared in Example 1 exhibit chemical inertness, whereas the hydroxyl groups in the DOPO-formaldehyde or DOPO-acetone adduct with an analogous structure but with a non-cyclic bridge chain structure have high chemical reactivity. The DOPO-acetone adduct even undergoes degradation and reversibly converts back to DOPO and acetone when heated.

### Comparative Example 3

82 parts of bisphenol A epoxy resin E44 were weighed and well mixed with a magnetic stirrer at 90°C; 18 parts of DDM were then added and melted completely at 90°C; the mixture was degassed in a 80°C vacuum oven for 3 min, then poured into a preheated mold quickly, left to stand still for 5 min, and heated to 120°C for curing for 2 h, then heated to 170°C for curing for 4 h, and finally cooled naturally to room temperature to obtain specimens for tests including UL-94 vertical burning, tensile, flexural and notched impact tests, with the results shown in Table 1.

### Comparative Example 4

77 parts of bisphenol A epoxy resin E44 and 6 parts of DiDOPO-A were weighed and well mixed with a magnetic stirrer at 90°C; 17 parts of DDM were then added and melted completely at 90°C; the mixture was degassed in a 80°C vacuum oven for 3 min, then poured into a preheated mold quickly, left to stand still for 5 min, and heated to 120°C for curing for 2 h, then heated to 170°C for curing for 4 h, and finally cooled naturally to room temperature to obtain specimens for tests including UL-94 vertical burning, tensile, flexural and notched impact tests, with the results shown in Table 1.

### Comparative Example 5

77 parts of bisphenol A epoxy resin E44 and 6 parts of the flame retardant prepared from DOPO and acetone were weighed and well mixed with a magnetic stirrer at 90°C; 17 parts of DDM were then added and melted completely at 90°C; the mixture was degassed in a 80°C vacuum oven for 3 min, then poured into a preheated mold quickly, left to stand still for 5 min, and heated to 120°C for curing for 2 h, then heated to 170°C for curing for 4 h, and finally cooled naturally to room temperature to obtain specimens for tests including UL-94 vertical burning, tensile, flexural and notched impact tests, with the results shown in Table 1.

### Comparative Example 6

100 parts of SA9000, 50 parts of TAIC and 200 parts of toluene were weighed and dissolved completely with a magnetic stirrer at room temperature, and then heated to 70°C; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Comparative Example 7

100 parts of SA9000, 50 parts of TAIC and 200 parts of toluene were weighed and dissolved completely with a magnetic stirrer at room temperature, and 50 parts of DiDOPO-A were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Comparative Example 8

100 parts of SA9000, 50 parts of TAIC and 200 parts of toluene were weighed and dissolved completely with a magnetic stirrer at room temperature, and 50 parts of OP935 were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Comparative Example 9

100 parts of SA9000, 50 parts of TAIC and 200 parts of toluene were weighed and dissolved completely with a magnetic stirrer at room temperature, and 50 parts of DOPO-formaldehyde adduct were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

### Comparative Example 10

100 parts of SA9000, 50 parts of TAIC and 200 parts of toluene were weighed and dissolved completely with a magnetic stirrer at room temperature, and 50 parts of DOPO-acetone adduct were added; the reaction system was heated to 70°C and well stirred until no bubbles were observed; 4 parts of DCP were added, and the reaction system was stirred at 70°C for 30 min, and then transferred to an 80°C vacuum oven to remove toluene to obtain a pre-cured resin. The pre-cured resin with the solvent removed was placed into a mold preheated at 100°C, followed by curing in a plate vulcanizing press with a curing procedure as follows: 150°C for 1 h, 170°C for 2 h, 190°C for 1 h and 220°C for 1 h. After natural cooling to room temperature, the specimens for UL-94 vertical burning, dielectric property and CTE tests were obtained, with the results shown in Table 2.

**Table 1 Formulations and properties of flame-retardant epoxy resin materials**

| | Example 5 | Example 6 | Example 7 | Example 8 | Comparative Example 3 | Comparative Example 4 | Comparative Example 5 |
|---|---|---|---|---|---|---|---|
| A (part) | 77 | 66 | 75.5 | 77 | 82 | 77 | 77 |
| B (part) | 17 | 14 | 16.5 | 17 | 18 | 17 | 17 |
| E1 (part) | Flame retardant prepared in Example 1 | Flame retardant prepared in Example 1 | Flame retardant prepared in Example 3 | Flame retardant prepared in Example 4 | | | |
| | 6 | 20 | 8 | 6 | | | |
| E2 (part) | | | | | | 6 | |
| E5 (part) | | | | | | | 6 |
| Tensile strength (MPa) | 81 | 40 | 107 | 105 | 102 | 78 | 72 |
| Tensile modulus (MPa) | 1900 | 1785 | 1906 | 1775 | 1811 | 1937 | 1833 |
| Elongation at break (%) | 5.9 | 3.2 | 9.2 | 10.0 | 8.6 | 5.2 | 5.2 |
| Flexural strength (MPa) | 96 | 78 | 157 | 150 | 148 | 92 | 105 |
| Flexural modulus (MPa) | 3104 | 2880 | 3088 | 2829 | 2844 | 3178 | 3149 |
| Notched impact strength (kJ/m²) | 5.6 | 3.3 | 8.5 | 11.0 | 11.9 | 5.9 | 3.9 |
| T_{g}(°C) | 146 | 143 | 141 | 150 | 149 | 139 | 133 |
| UL-94 | V0 | V0 | V0 | V0 | NR | V0 | V1 |

A comparison between Example 5 and Comparative Example 4 in Table 1 shows that the flame retardant prepared in Example 1 exhibits flame retardance comparable to that of DiDOPO-A. However, at the same addition level, the flame-retardant epoxy resin containing the flame retardant prepared in Example 1 is superior to that of Comparative Example 4 in terms of physical properties. In particular, the flame retardant prepared in Example 1 has less impact on the glass transition temperature (T_{g}) of the epoxy resin. Even at a high addition level (20 parts), the results of Example 6 demonstrate that the T_{g} of the flame-retardant epoxy resin is still higher than that of the flame-retardant epoxy resin with addition of 6 parts of DiDOPO-A, which indicates the critical role of the hydroxyl groups in the flame retardant in maintaining the physical properties of the epoxy resin. It can be seen from the results of Examples 7 and 8 that the flame retardants prepared in Examples 3 and 4 show high flame retardant efficiency, and the resulting flame-retardant epoxy resins achieve better mechanical properties and higher glass transition temperatures than those of the resin prepared in Comparative Example 4. Moreover, the mechanical properties of the flame-retard ant epoxy resin obtained in Example 8 are comparable to those of the neat epoxy resin in Comparative Example 3. A comparison between Example 5 and Comparative Example 5 leads to the conclusion that the flame retardant prepared in Example 1 not only has higher flame retardant efficiency, but also better remains the physical properties of the epoxy resin. This indicates the significant advantages of the cyclic bridge chain structure over a non-cyclic substituent.

**Table 2 Formulations of low-dielectric flame-retardant polyphenylene ether resin compositions**

| Component | Example 9 | Example 10 | Example 11 | Example 12 | Example 13 | Example 14 | Example 15 | Comparative Example 6 | Comparative Example 7 | Comparative Example 8 | Comparative Example 9 | Comparative Example 10 |
|---|---|---|---|---|---|---|---|---|---|---|---|---|
| C (part) | 100 | 100 | 100 | 100 | 100 | 100 | 100 | 100 | 100 | 100 | 100 | 100 |
| D (part) | 50 | 50 | 50 | 50 | 50 | 50 | 50 | 50 | 50 | 50 | 50 | 50 |
| E1 (part) | Flameretardantprepared inExample 1 | Flame retardant prepared in Example 2 | Flameretardantprepared inExample 1 | Flameretardantprepared inExample 2 | Flameretardantprepared inExample 2 | Flameretardantprepared inExample 3 | Flameretardantprepared inExample 4 | | | | | |
| | 50 | 70 | 45 | 112 | 112 | 70 | 50 | | | | | |
| E2 (part) | | | | | | | | | 50 | | | |
| E3 (part) | | | 5 | | | | | | | 50 | | |
| E4 (part) | | | | | | | | | | | 50 | |
| E5 (part) | | | | | | | | | | | | 50 |
| F1 (part) | | | | 72 | | | | | | | | |
| F2 (part) | | | | | 72 | | | | | | | |
| G (part) | 4 | 4 | 4 | 4 | 4 | 4 | 4 | 4 | 4 | 4 | 4 | 4 |
| H (part) | | | | 80 | 80 | | | | | | | |
| Physical property | | | | | | | | | | | | |
| Dk (9-12 GHz) | 2.77 | 2.82 | 2.78 | 2.79 | 2.97 | 2.81 | 2.80 | 2.67 | 2.80 | 2.72 | 2.78 | 2.83 |
| Df (9-12 GHz) | 0.0065 | 0.0059 | 0.0051 | 0.0029 | 0.0047 | 0.0045 | 0.0041 | 0.0085 | 0.0058 | 0.0068 | 0.0095 | 0.022 |
| T_{g} (°C) | 203 | 189 | 207 | 196 | 194 | 196 | 197 | 187 | 215 | 190 | 191 | 160 |
| CTE | | | | | | | | | | | | |
| α1 (ppm/°C, 50-120°C ) | 117 | 115 | 125 | 157 | 216 | 185 | 136 | 145 | 119 | 132 | 176 | 154 |
| Average CTE (%/°C, 50-260°C ) | 1.44 | 1.24 | 1.58 | 1.38 | 1.48 | 2.62 | 1.80 | 1.54 | 1.40 | 1.74 | 1.68 | 3.1 3 |
| Flame retardance UL-94 | V0 | V0 | V0 | V0 | V0 | V0 | V0 | NR | V1 | V0 | NR | V1 |

It can be concluded from the results of Examples 9 and 10 and Comparative Example 6 in Table 2 that the flame retardants prepared in Examples 1 and 2 not only increase the T_{g} of the cured resin, but also reduce the Df value and coefficient of linear expansion. A larger amount of the flame retardant causes a more significant reduction in the Df value and coefficient of linear expansion. The results of Comparative Examples 9 and 10 and Comparative Example 6 demonstrate that the DOPO derivatives containing hydroxyl groups but no cyclic bridge chain structure not only exhibit poor flame retardance, but also significantly increase the Df value of the polyphenylene ether resin system. In contrast, the results of Examples 9, 14 and 15 show that the flame retardants with a cyclic bridge chain structure, prepared in Examples 1, not only have high flame retardant efficiency, but also significantly reduce the Df value of the polyphenylene ether resin system, which is quite surprising. The results of Examples 9, 14, 15 and Comparative Example 7 show that the flame retardants prepared in Examples 1, 3 and 4 have higher flame retardant efficiency despite having lower phosphorus content than DiDOPO-A. A comparison between Examples 9 and 11 and Comparative Example 8 reveals that the combined use of the flame retardant prepared in Example 1 and aluminum dialkylphosphinate not only enables the polyphenylene ether resin system to reach the same V0 flame retardant grade, but also unexpectedly results in a lower Df value for the system compared with the separate use of either of the flame retardant prepared in Example 1 and aluminum dialkylphosphinate.

The various aspects, embodiments, features of the present invention should be considered illustrative in all respects without limiting the present invention. The scope of the present invention is defined only by the claims. Persons skilled in the art will appreciate other embodiments, modifications, and use without departing from the spirit and scope of the present invention.

In the preparation method of the present invention, the order of steps is not limited to the listed order, and for those skilled in the art, it is also within the scope of the present invention to change the order of steps without paying creative labor. In addition, two or more steps or actions may be performed simultaneously.

Finally, it should be noted that the specific embodiments described herein are merely illustrative of the present invention and are not intended to limit the embodiments of the present invention. Various modifications or additions to, or alternatives to, the specific embodiments described may be made by those skilled in the art to which the present invention pertains. It is not necessary and impossible to illustrate all embodiments here. However, these obvious changes or modifications derived from the essential spirit of the present invention shall still fall within the scope of the present invention, and any interpretation thereof as an additional limitation shall be contrary to the spirit of the present invention.

## Claims

1. A DOPO derivative flame retardant containing α-hydroxyl and having a cyclic structure as a bridge chain, which has a structure represented by formula (I) below: 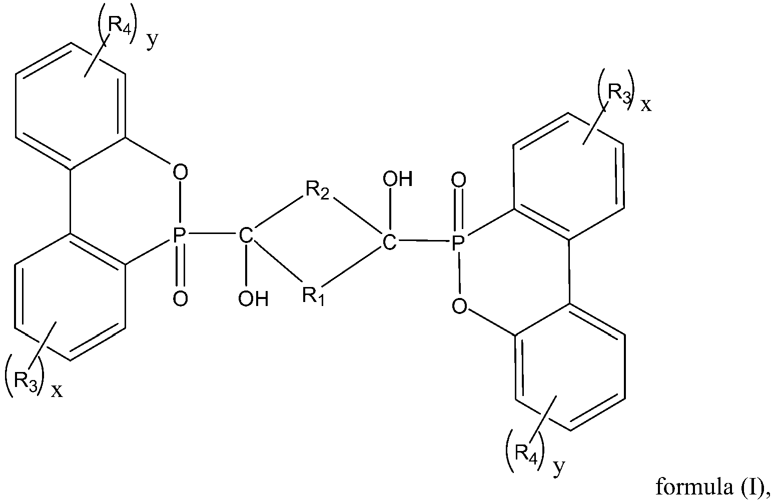
wherein R₁ and R₂ are independently selected from C₁-C₁₈alkylene, and optionally, any hydrogen atom on the alkylene is independently substituted with C₁-C₈ alkyl or C₆-C₁₈ aryl;
R₃ and R₄ are independently selected from hydrogen, C₁-C₁₈ alkyl, C₃-C₁₈heteroaryl, and C₆-C₂₄ aryl, and optionally, any hydrogen atom on an aromatic ring of the aryl or heteroaryl is independently substituted with any C₁-C₁₈ alkyl; and
x and y are independently selected from 0, 1, 2, 3, and 4.

2. The DOPO derivative flame retardant containing α-hydroxyl and having a cyclic structure as a bridge chain according to claim 1, wherein R₁ and R₂ are independently selected from C₁-C₈ alkylene, and optionally, any hydrogen atom on the alkylene is independently substituted with C₁-C₈ alkyl; R₃ and R₄ are independently selected from hydrogen, C₁-C₈ alkyl, C₃-C₁₈heteroaryl, and C₆-C₁₈ aryl.

3. The DOPO derivative flame retardant containing α-hydroxyl and having a cyclic structure as a bridge chain according to claim 1 or 2, wherein R₁ and R₂ are independently selected from methylene, ethylene, propylene, butylene, methyl-substituted methylene, dimethyl-substituted methylene, ethyl-substituted methylene, methyl-substituted ethylene, dimethyl-substituted ethylene, methyl-substituted propylene, dimethyl-substituted propylene, and propyl-substituted propylene;
R₃ and R₄ are independently selected from hydrogen, methyl and ethyl.

4. A preparation method for the DOPO derivative flame retardant containing α-hydroxyl and having a cyclic structure as a bridge chain according to claim 1, the preparation method comprising the following step:
reacting a compound having a structure of formula (II) with an aliphatic cyclic diketone compound having a structure of formula (III) to obtain the DOPO derivative flame retardant containing α-hydroxyl and having a cyclic structure as a bridge chain; 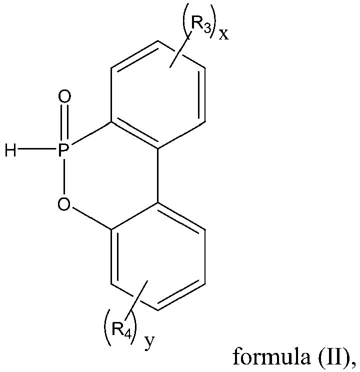
wherein R₃ and R₄ are independently selected from hydrogen, C₁-C₁₈ alkyl, C₃-C₁₈heteroaryl, and C₆-C₂₄ aryl, and optionally, any hydrogen atom on an aromatic ring of the aryl or heteroaryl is independently substituted with any C₁-C₁₈ alkyl; and
x and y are independently selected from 0, 1, 2, 3, and 4; 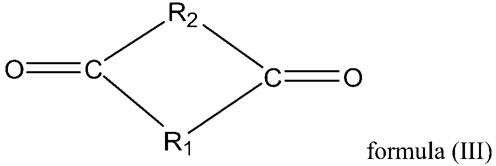
wherein R₁ and R₂ are independently selected from C₁-C₁₈alkylene, and optionally, any hydrogen atom on the alkylene is independently substituted with C₁-C₈ alkyl or C₆-C₁₈ aryl.

5. The preparation method according to claim 4, wherein the compound having the structure of formula (II) is 9,10-dihydro-9-oxa-10-phosphaphenanthrene-10-oxide.

6. The preparation method according to claim 4, wherein the aliphatic cyclic diketone compound having the structure of formula (III) is one or more selected from cyclohexanedione, cyclobutanedione, cyclopentanedione, cycloheptanedione, cyclooctanedione, methylcyclohexanedione, dimethylcyclohexanedione, propylcyclohexanedione, tetramethylcyclobutanedione, methylcyclopentanedione, dimethylcyclopentanedione, and ethylcyclopentanedione.

7. The preparation method according to claim 4, wherein a molar ratio of the compound having the structure of formula (II) to the aliphatic cyclic diketone compound having the structure of formula (III) is 2-20: 1.

8. The preparation method according to claim 4, wherein reaction time is between 0.01 h and 25 h, and reaction temperature ranges from 5°C to 250°C.

9. A flame-retardant polymer material, comprising a polymer material and the DOPO derivative flame retardant containing α-hydroxyl and having a cyclic structure as a bridge chain according to claim 1.

10. The flame-retardant polymer material according to claim 9, wherein a mass fraction of the DOPO derivative flame retardant containing α-hydroxyl and having a cyclic structure as a bridge chain in the flame-retardant polymer material ranges from 1 wt% to 50 wt%.

11. The flame-retardant polymer material according to claim 9, wherein the flame-retardant polymer material comprises the DOPO derivative flame retardant containing α-hydroxyl and having a cyclic structure as a bridge chain and a phosphorus-based flame retardant, and a mass ratio of the DOPO derivative flame retardant containing α-hydroxyl and having a cyclic structure as a bridge chain to the phosphorus-based flame retardant is 1-20:1.

12. A low-dielectric flame-retardant resin composition, comprising 100 parts by weight of vinyl polyphenylene ether resin and 2 to 150 parts by weight of the DOPO derivative flame retardant containing α-hydroxyl and having a cyclic structure as a bridge chain according to claim 1.

13. The low-dielectric flame-retardant resin composition according to claim 12, wherein the low-dielectric flame-retardant resin composition has a dielectric loss factor lower than that of a composition comprising the vinyl polyphenylene ether resin but not comprising the DOPO derivative flame retardant containing α-hydroxyl and having a cyclic structure as a bridge chain.

14. The low-dielectric flame-retardant resin composition according to claim 12, wherein the low-dielectric flame-retardant resin composition comprises the DOPO derivative flame retardant containing α-hydroxyl and having a cyclic structure as a bridge chain and a phosphorus-based flame retardant, and a mass ratio of the DOPO derivative flame retardant containing α-hydroxyl and having a cyclic structure as a bridge chain to the phosphorus-based flame retardant is 1-20:1.

15. A flame-retardant epoxy resin, comprising the DOPO derivative flame retardant containing α-hydroxyl and having a cyclic structure as a bridge chain according to claim 1, an epoxy compound and a curing agent.

16. A preparation method for the flame-retardant epoxy resin according to claim 15, comprising the following steps:
melting and stirring the epoxy compound, the curing agent and the DOPO derivative flame retardant containing α-hydroxyl and having a cyclic structure as a bridge chain for 0.1 h to 4 h at a temperature between room temperature and 120°C, and then curing for 0.5 h to 8 h at a temperature between 70°C and 90°C, curing for 0.5 h to 8 h at a temperature between 110°C and 130°C, and curing for 0.5 h to 8 h at a temperature between 160°C and 180°C, and cooling naturally to obtain the flame-retardant epoxy resin.
